# EUROPÄISCHE PATENTSCHRIFT

(11) **EP 2 116 420 B1**
(45) Veröffentlichungstag und Bekanntmachung des Hinweises auf die Patenterteilung: **30.04.2014**
(21) Anmeldenummer: 08103906.7
(22) Anmeldetag: 09.05.2008
(51) Int. Cl.: B60P 7/08, B62D 25/20, B62D 33/04

(54) **Kofferaufbau mit einem eine Befestigungseinrichtung aufweisenden Paneel**
Box body with a panel with a fixing device
Structure de coffre dotée d'un panneau comprenant un dispositif de fixation

(43) Veröffentlichungstag der Anmeldung: 11.11.2009
(73) Patentinhaber: Schmitz Cargobull AG, 48341 Altenberge (DE)
(72) Erfinder: Beelmann, Reinhard, Dipl.- Ing., 45721 Haltern am See (DE); Heßling, Alfons, 48683 Ahaus (DE); Küpers, Josef, 48703 Stadtlohn (DE)
(74) Vertreter: Cohausz & Florack

(56) Entgegenhaltungen:
- EP-A- 0 124 807
- DE-A1- 10 110 996
- FR-A- 2 332 401
- US-A1- 2002 100 171

## Beschreibung

Die Erfindung betrifft einen Kofferaufbau eines Lastkraftwagens, Aufliegers und/oder Anhängers mit einem Paneel, insbesondere Dachpaneel, Seitenwandpaneel und/oder Bodenpaneel, wobei das Paneel eine innere Decklage, eine äußere Decklage und einen dazwischen angeordneten Kernbereich aufweist, wobei das Paneel wenigstens eine Befestigungseinrichtung zum Befestigen von Zusatzeinrichtungen des Kofferaufbaus umfasst und wobei die Befestigungseinrichtung ein zur Innenseite des Paneels geöffnetes Schienenelement aufweist.

Moderne Kofferaufbauten sind in der Regel aus einzelnen Paneelen in Sandwichbauweise aufgebaut. Dabei bestehen meist keine grundsätzlichen Unterschiede hinsichtlich der Sandwichbauweise zwischen den einzelnen Paneelen des Kofferaufbaus, egal ob diese beispielsweise eine Seitenwand oder ein Dach bilden. Zwischen einer inneren Decklage und einer äußeren Decklage, welche auch als Innen- und Außenhaut des Paneelelements bezeichnet werden können, ist ein isolierender Kern, vorzugsweise aus einem geschäumten Kunststoff, vorgesehen.

Die Paneele können Befestigungseinrichtungen in Form von Schienensystemen aufweisen. Diese Schienensysteme erlauben beispielsweise das variable Anbringen von Zusatzeinrichtungen, wie Zurrgurten oder dergleichen zur Ladungssicherung von Trägerelementen quer zum Kofferaufbau, auf die dann Paletten mit entsprechenden Gütern in einer vom Bodenpaneel beabstandeten Etage aufgesetzt werden, oder von Aufnahmen für den hängenden Transport bestimmter Güter.

Ein gattungsgemäßer Kofferaufbau wird in der EP 0 124 807 A1 gezeigt.

Die bekannten Schienenelemente können senkrecht zur Ebene des jeweiligen Paneels nicht unbegrenzt belastet werden, da die Schienenelemente durch die Sandwichbauweise der Paneele nicht ausreichend gestützt werden können. Bei einer übermäßigen Belastung senkrecht zur Ebene des Paneels kommt es daher regelmäßig zu einem Durchbiegen oder gar Knicken des Schienenelements. Letztlich kann das gesamte Schienenelement aus dem Paneel reißen. Derartige Beschädigungen müssen aufwendig repariert werden.

Um diese Gefahr zu mindern, können die Schienenelemente sehr massiv ausgebildet werden. Diese Ausgestaltung der Schienenelemente hat jedoch erhöhte Fertigungskosten und Materialkosten zur Folge.

Daher liegt der vorliegenden Erfindung die Aufgabe zugrunde, einen Kofferaufbau derart auszugestalten und weiterzubilden, dass die verbauten Schienenelemente höheren Belastungen Stand halten, ohne dass dadurch die Fertigungskosten zur Herstellung des Kofferaufbaus unverhältnismäßig ansteigen.

Diese Aufgabe wird durch einen Kofferaufbau nach den Merkmalen des Anspruchs 1 gelöst.

Die Erfindung hat also die Vorteile einer zweiteiligen Ausgestaltung der Befestigungseinrichtung erkannt. Das Schienenelement dient vorwiegend der Aufnahme von Zusatzeinrichtungen, wie Ladungssicherungen zum Sichern der in den Kofferaufbau eingeladenen Transportgüter, wie Trägersysteme zum Einziehen zusätzlicher Etagen in den Kofferaufbau, oder wie Aufnahmen zum hängenden Transport bestimmter Güter. Dagegen dient das Verstärkungsprofil vorwiegend der Aussteifung des Schienenelements.

Die Montage der Befestigungseinrichtung wird durch die zweiteilige Ausgestaltung positiv beeinflusst, obwohl erfindungsgemäß zwei separate Bauteile montiert werden müssen. Durch die Zweiteilung kann das Schienenelement an der Innenseite des Paneels montiert werden, wobei das Schienenelement vorzugsweise fluchtend mit der inneren Decklage abschließt. Das Verstärkungsprofil stört die Montage des Schienenelements nicht, da das Verstärkungsprofil vorzugsweise erst nach der Montage des Schienenelements mit diesem verbunden wird, und zwar von der Rückseite des Schienenelements, wobei das Verstärkungsprofil zum Zwecke der Verbindung durch die Öffnung in der inneren Decklage hindurch greifen kann.

Mit anderen Worten erlaubt die Zweiteiligkeit der Befestigungseinrichtung nicht nur das Montieren des Schienenelements und des Verstärkungsprofils nacheinander, sondern auch von unterschiedlichen Seiten der inneren Decklage. Das Verstärkungsprofil ist unabhängig von einem etwaigen Durchgreifen des Verstärkungsprofils durch die Öffnung im Wesentlichen im Kernbereich des Paneels angeordnet. Die Montage des Schienenelements und des Verstärkungsprofils von zwei unterschiedlichen Seiten der inneren Decklage erlaubt zudem die Verwendung von verhältnismäßig sperrigen Verstärkungsprofilen, welche die Aussteifung des Schienenelements und letztlich das Flächenträgheitsmoment der Befestigungseinrichtung insgesamt erhöhen. Solche sperrigen Verstärkungsprofile sind nicht oder nur mit hohem Aufwand von der Innenseite der inneren Decklage zu montieren.

Letztlich wird der Laderaum des erfindungsgemäßen Kofferaufbaus nicht verringert, da das Verstärkungsprofil wenigstens im Wesentlichen im Kernbereich des entsprechenden Paneels aufgenommen ist und zudem das Verstärkungsprofil keinen Einfluss auf die Abmessungen des Paneels hat.

Bei einer ersten Ausgestaltung des Kofferaufbaus ist das Schienenelement jedenfalls abschnittsweise in der Öffnung der inneren Decklage vorgesehen, wodurch die Montage und Fixierung des Schienenelements erheblich vereinfacht sein kann. Dies gilt insbesondere dann, wenn die Öffnung durch nach innen umgebogene Stege der inneren Decklage jedenfalls seitlich begrenzt wird.

Alternativ oder zusätzlich ist das Versteifungsprofil länger als die Öffnung der inneren Decklage und wäre daher nicht oder nur sehr aufwendig von der Innenseite der inneren Decklage zu montieren. Da sich das Versteifungsprofil weiter vorzugsweise auch zu beiden Seiten über das Schienenelement hinaus erstreckt, wird ein höheres Flächenträgheitsmoment und damit eine höhere Steifigkeit der Befestigungseinrichtung insgesamt erreicht. Das Versteifungsprofil kann dabei trotz seiner Länge einfach von der Außenseite der inneren Decklage aus montiert werden.

In diesem Zusammenhang ist es besonders bevorzugt, wenn sich das Versteifungsprofil in Richtung des Schienenelements wenigstens im Wesentlichen entlang des gesamten Paneels erstreckt. Bei einem quer zum Paneel verlaufenden Schienenelement erstreckt sich das Versteifungsprofil also im Wesentlichen über die gesamte Breite des Paneels, während sich das Versteifungsprofil im Wesentlichen über die gesamte Länge des Paneels erstreckt, wenn sich das Schienenelement in Längsrichtung des Paneels erstreckt. In einem solchen Fall wird nicht nur das Flächenträgheitsmoment größer. Das Verstärkungsprofil ist auch mehr oder weniger gegenüber dem sich dem jeweiligen Paneel anschließenden Paneel abgestützt. Dies ist besonders ausgeprägt, wenn die aneinander angrenzenden Paneele des Kofferaufbaus im Wesentlichen rechtwinklig zueinander ausgerichtet sind. Dies ist bei den üblichen, rechtwinkligen Kofferaufbauten der Fall.

Besonders hohe Flächenträgheitsmomente lassen sich erreichen, wenn das Versteifungsprofil einen T-förmigen, H-förmigen oder Ω -förmigen Querschnitt aufweist. Dabei ist der Platzbedarf derartiger Versteifungselemente wegen der zweiteiligen Ausgestaltung der Befestigungseinrichtung weder hinsichtlich des Montierens noch des Unterbringens im Kernbereich des Paneels ein Problem. Unter einem Ω-förmigen Querschnitt werden alle Querschnitte verstanden, die im Wesentlichen geschlossen sind und im Wesentlichen ähnlich eines Ω um eine innere Fläche umlaufen. Es handelt sich also um umlaufende Profilquerschnitte, die vorzugsweise angrenzend zum Schienenelement geöffnet sind, um mit dem Schienenelement auf einfache Weise verbunden werden zu können.

Um die Montage von Schienenelement und Versteifungsprofil sehr schnell und unkompliziert bewerkstelligen zu können, ist das Versteifungsprofil vorzugsweise formschlüssig mit dem Schienenelement verbunden. Das Versteifungsprofil und das Schienenelement können beispielsweise einfach ineinander geklipst bzw. miteinander verrastet werden, was eine kostengünstige, schnelle Montage sicherstellt.

Das Schienenelement wird formschlüssig im Paneel gehalten, wobei ein Verklipsen oder Verrasten zwischen dem Schienenelement und dem Paneel vorgesehen ist. Die formschlüssige Verbindung wird dabei direkt zwischen der inneren Decklage, vorzugsweise zwischen die Öffnung begrenzenden Stegen der inneren Decklage, und dem Schienenelement etabliert. So muss das Paneel nicht mit zusätzlichen Verbindungsmitteln ausgerüstet werden.

Damit es unabhängig von der Wahl des Querschnitts des Versteifungsprofils nicht zu einer Verkomplizierung der Montage des Paneels oder einer merklichen Verschlechterung der Isolationseigenschaften kommt, kann das Versteifungsprofil in das Paneel eingeschäumt sein. Dann ist vorzugsweise zwischen dem Versteifungsprofil und der äußeren Decklage des Paneels eine ausreichende Schicht geschäumten Kunststoffmaterials vorgesehen, damit keine Kältebrücke entsteht.

Bei einer besonders bevorzugten Ausgestaltung des Kofferaufbaus ist das die Befestigungseinrichtung aufweisende Paneel das Dachpaneel des Kofferaufbaus. Dies ist daher besonders zweckmäßig, weil beim Anhängen von Bauteilen an das Dachpaneel die Gewichtskraft senkrecht zur Ebene des Dachpaneels wirkt und so leicht zu einem Knicken des Schienenelements führen könnte. Dies ist von besonderer Bedeutung, wenn am Dachpaneel ein Fleischhangsystem vorgesehen werden soll. In einem solchen Fall wirken nämlich teilweise sehr hohe Gewichtskräfte auf das Schienenelement.

Wenn die Befestigungseinrichtung an einem Dachpaneel montiert ist, bietet es sich an, wenn das Versteifungsprofil im Bereich wenigstens eines seitlichen Randes des Dachpaneels gegenüber einem Seitenwandpaneel abgestützt ist. Vorzugsweise erstreckt sich das Versteifungsprofil bis in die gegenüberliegenden Anschlussbereiche des Dachpaneels mit den Seitenwandpaneelen hinein, wo die Versteifungsprofile dann bedarfsweise durch zusätzliche Einrichtungen wie etwa Stützprofilen gegenüber den Seitenwandpaneelen abgestützt sind. Es kann jedoch ausreichend sein, wenn die zusätzliche Einrichtung im Anschlussbereich des Dachpaneels vorgesehen und mit dem Versteifungsprofil außerhalb des Anschlussbereichs verbunden ist. Die vertikalen Kräfte werden also besonders günstig in die Seitenwandpaneele abgeleitet.

Bei einem in Längsrichtung des Dachpaneels ausgerichteten Schienenelement in Längsrichtung des Dachpaneels kann alternativ vorgesehen sein, dass das Versteifungsprofil im Bereich wenigstens eines seitlichen Randes des Dachpaneels gegenüber einem Stirnwandpaneel und/oder einem Rückwandpaneel abgestützt ist. Das Versteifungsprofil erstreckt sich also vorzugsweise in die Anschlussbereiche des Dachpaneels mit dem Stirnwand- und dem Rückwandpaneel hinein. Das Prinzip der Ableitung der Kräfte und die konstruktive Lösung, ist dabei analog zu der Ableitung der vertikalen Kräfte über die Seitenwandpaneele. Folglich werden prinzipiell auch die gleichen Vorteile erzielt.

Eine entsprechende Abstützung gegenüber einem oder zwei Paneelen, ist grundsätzlich auch möglich, wenn die Befestigungseinrichtung in einem Seitenwandpaneel, einem Stirnwandpaneel und/oder Bodenpaneel vorgesehen ist. Dann dient die Abstützung jedoch vornehmlich dem Ableiten von Zugkräften statt von Gewichtskräften.

Die zusätzlichen Einrichtungen wie beispielsweise Stützprofile können entweder ausschließlich in dem Paneel mit der Befestigungseinrichtung vorgesehen sein oder aber sich in ein angrenzendes Paneel wie etwa das Seitenwandpaneel erstrecken. Alternativ oder zusätzlich kann vorgesehen sein, dass ein Stützprofil auf das Versteifungsprofil auf- und/oder eingesteckt ist. Ebenfalls denkbar ist, dass sich das Stützprofil in Längs- oder Querrichtung erstreckt und über seine Länge mit einer Mehrzahl von Versteifungsprofilen beispielsweise durch Auf- und/oder Eingesteckt verbunden ist. Die Versteifungsprofile sind dabei vorzugsweise unterschiedlichen Befestigungseinrichtungen zugeordnet und verlaufen beispielsweise parallel zueinander.

Es versteht sich, dass die beschriebene Abstützung des Versteifungsprofils entweder an einem angrenzenden Paneel oder, in vorzugsweise gleicher Weise, an zwei gegenüberliegenden Paneelen vorgesehen sein kann. Dies gilt ganz allgemein und unabhängig davon, wie die Abstützung im Einzelnen konstruktiv ausgestaltet ist.

Besonders einfach kann das Versteifungsprofil als gerolltes Profil gefertigt werden. Dies kann auch zu einer Gewichtseinsparung gegenüber etwa einem stranggepressten Versteifungsprofil führen. Ein Vorteil liegt dabei zudem darin, dass bei dem gerollten Profil ohne weiteres zwei mehr oder weniger flexible Ränder vorgesehen werden können, welche die Montage des Versteifungsprofils an dem Schienenelement vereinfachen.

Im Falle der Verwendung eines gerollten Profils als Versteifungsprofil greifen die freien Ränder des Versteifungsprofils formschlüssig in Hinterschneidungen am Schienenelement ein. So wird ein dauerhafter Formschluss erreicht. Dabei können die freien Ränder des Versteifungsprofils bedarfsweise unlösbar in entsprechenden Aussparungen des Schienenelements eingreifen oder einrasten.

Nachfolgend wird die Erfindung anhand einer lediglich ein Ausführungsbeispiel darstellenden zeichnung näher erläutert. In der Zeichnung zeigt
- Fig. 1: einen Lastkraftwagen mit einem den erfindungsgemäßen Kofferaufbau tragenden Auflieger,
- Fig. 2: das Detail II des Dachpaneels des Kofferaufbaus aus Fig. 1 im Bereich einer Befestigungseinrichtung,
- Fig. 3: das Detail des Dachpaneels aus Fig. 2 in einer Schnittansicht entlang einer Ebene III-III aus Fig. 2 und
- Fig. 4: das Detail des Dachpaneels aus Fig. 3 in einer Schnittansicht entlang einer Ebene IV-IV aus Fig. 3.

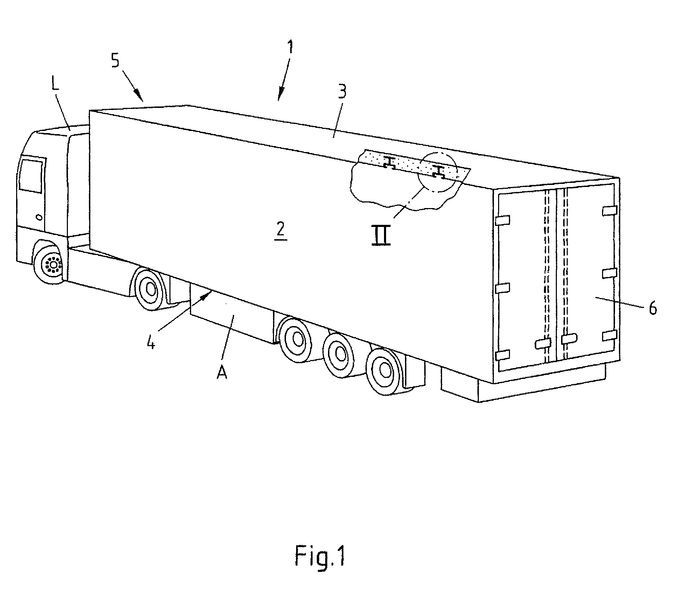

In der Fig. 1 ist ein Lastkraftwagen L mit einem Auflieger A dargestellt, der einen Kofferaufbau 1 trägt. Der Kofferaufbau 1 ist aus einzelnen Paneelelementen zusammengesetzt. Dabei handelt es sich um zwei Seitenwandpaneele 2, ein Dachpaneel 3, ein Bodenpaneel 4, ein Stirnwandpaneel 5 und ein Rückwandpaneel 6. Am Dachpaneel 3 des Kofferaufbaus 1 ist quer zur Längserstreckung des Kofferaufbaus 1 eine Befestigungseinrichtung 8 montiert, die zur Aufnahme eines Fleischhangsystems vorgesehen ist. Da die an dem Fleischhangsystem aufgehängten Schweine- oder Rinderhälften sehr stark an der Befestigungseinrichtung 8 ziehen, ist die Befestigungseinrichtung 8 entsprechend ausgesteift, so dass ein Knicken der Befestigungseinrichtung 8 vermieden wird.

Alternativ könnte der Kofferaufbau auch direkt auf einem Lastkraftwagen oder einem gewöhnlichen Anhänger montiert sein. Zudem wäre ein Paneel im Sinne der Erfindung nicht nur eine mehrlagige bzw. mehrschichtige Struktur, sondern auch eine andere, beispielsweise massive, Struktur.

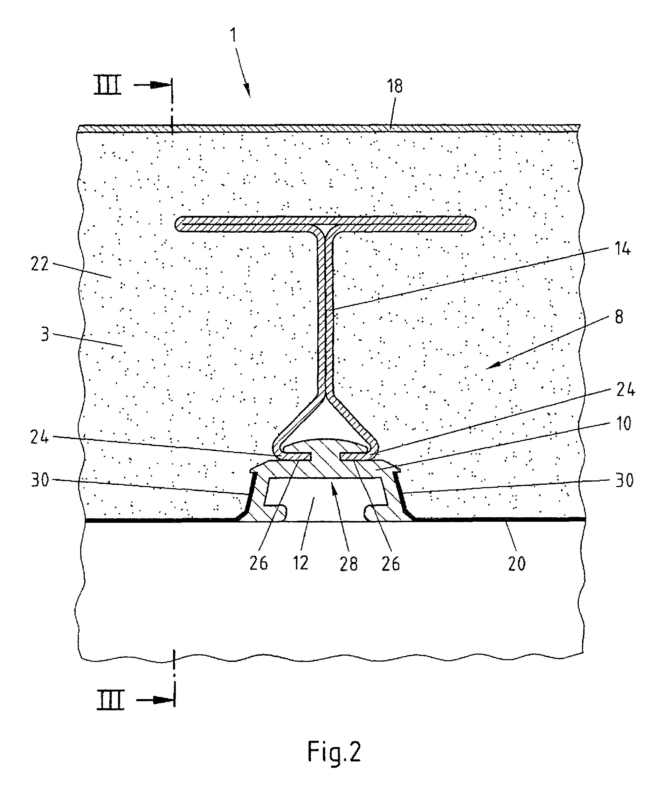

Ein die Befestigungseinrichtung 8 umfassendes Segment des Dachpaneels 3 ist in der Fig. 2 in einem vertikalen Schnitt längs zum Kofferaufbau 1 dargestellt. Die Befestigungseinrichtung 8 umfasst ein Schienenelement 10 mit einer nach unten hin geöffneten Nut 12 und ein Versteifungsprofil 14 oberhalb des Schienenelements 10.

Das Dachpaneel 3 ist nach oben durch eine äußere Decklage 18 und nach unten durch eine innere Decklage 20 begrenzt. Dazwischen befindet sich ein Kernbereich 22 aus einem geschäumten Kunststoffmaterial, bei dem es sich im dargestellten und insoweit bevorzugten Ausführungsbeispiel um einen Polyurethanschaum handelt. Im Kernbereich 22 des Dachpaneels 3 ist das Versteifungsprofil 14 der Befestigungseinrichtung 8 aufgenommen, wobei das Versteifungsprofil 14 einen ausreichenden Abstand zu der äußeren Decklage 18 aufweist, damit keine Kältebrücke entsteht. Mit anderen Worten ist oberhalb des Versteifungsprofils 14 noch eine ausreichend breite Isolationsschicht aus Polyurethanschaum vorgesehen.

Im dargestellten und insoweit bevorzugten Ausführungsbeispiel ist das Versteifungsprofil 14 T-förmig ausgebildet, wobei das Versteifungsprofil 14 teilweise auf dem geschäumten Kunststoffmaterial des Kernbereichs 22 aufliegt. Andere Querschnittsformen des Versteifungsprofils sind aber ebenfalls denkbar, da hier weniger die Auflage des Versteifungsprofils auf dem geschäumten Kunststoffmaterial des Dachpaneels als vielmehr ein hohes Flächenträgheitsmoment zur Vermeidung einer Durchbiegung von Bedeutung ist.

Das Versteifungsprofil 14 ist im dargestellten und insoweit bevorzugten Ausführungsbeispiel durch Rollen aus einem Blech hergestellt. Es handelt sich mithin um ein gerolltes Profil. Das gerollte Profil weist in der dargestellten und insoweit bevorzugten Ausführungsform im Querschnitt zwei freie in ausreichendem Maße elastische Ränder 24 auf, die sich vorzugsweise über die gesamte Länge des Schienenelements 10 erstrecken. Diese Ränder 24 greifen in entsprechende, als Hinterschneidungen ausgebildete Aussparungen 26 des Schienenelements 10 ein, wobei das Versteifungsprofil 14 vorzugsweise auf die Rückseite des Schienenelements 10 aufgesteckt und dort verrastet wird.

Das Schienenelement 10 ist in einer Öffnung 28 in der inneren Decklage 20 des Dachpaneels 3 aufgenommen und vorzugsweise von der Innenseite der inneren Decklage 29 her gefügt. Die innere Decklage 20 weist angrenzend zur Öffnung 28 gegenüberliegende nach innen umgebogene Stege 30 auf, die formschlüssig unter seitlich hervorstehende Wülste des Schienenelements greifen und so ein Herausrutschen des Schienenelements 10 aus der Öffnung 28 verhindern. Im Bereich der Stege 30 ist das dargestellte Schienenelement 10 zusätzlich noch mit der inneren Decklage 20 verklebt. Dabei ist das Schienenelement 10 derart im Dachpaneel 3 positioniert, dass die Unterseite des Schienenelements 10 bündig mit der Innenseite der inneren Decklage 20 abschließt.

Nicht im Einzelnen dargestellt ist, dass in die von dem Schienenelement gebildete T-Nut ein Nutenstein eingreifen kann, um daran ein Fleischhangsystem zu montieren. Das Fleischhangsystem besteht dabei im Wesentlichen aus einem unter dem Dachpaneel verlaufenden Rohr, das in einer den Nutenstein umfassenden Montagevorrichtung gelagert ist.

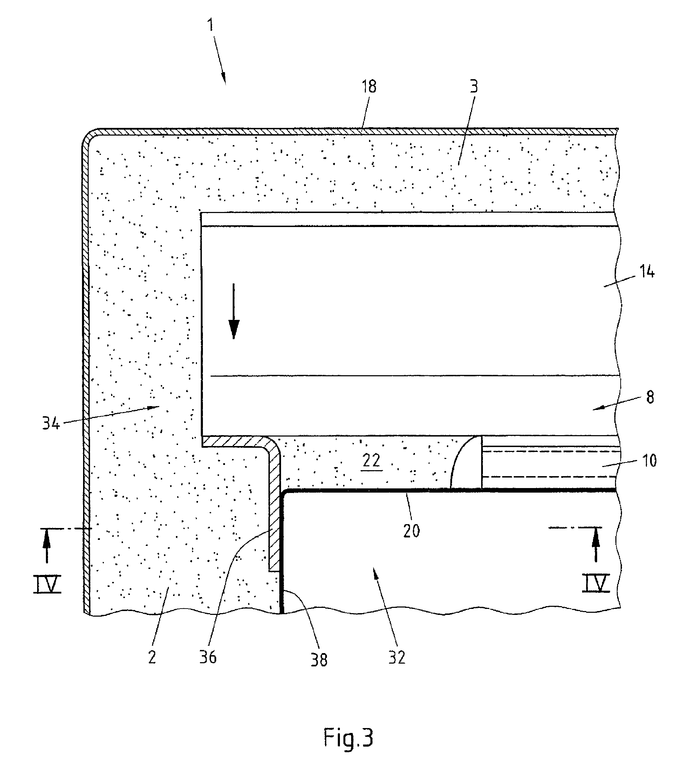

In der Fig. 3 ist ein Eckabschnitt des Kofferaufbaus 1 zwischen dem Dachpaneel 3 und dem angrenzenden Seitenwandpaneel 2 entsprechend der Schnittansicht III-III aus Fig. 2 unter teilweiser Weglassung des Kunststoffschaums im Kernbereich 22 dargestellt, um den Blick auf die Befestigungseinrichtung 14 freizugeben. Das bündig mit der inneren Decklage 20 abschließende Schienenelement erstreckt sich nicht bis in den Randbereich 32 des Dachpaneels 3. Das Schienenelement 10 ist also nicht kürzer als die innere Breite des Kofferaufbaus 1, die durch die seitlich an das Dachpaneel 3 angrenzenden Seitenwandpaneele 2 begrenzt wird.

Das Versteifungsprofil 14 ist vollständig im Dachpaneel 3 angeordnet und erstreckt sich im Unterschied zum Schienenelement 10 über die gesamte innere Breite des Kofferaufbaus 1 und darüber hinaus. Aufgrund dessen wird das Versteifungsprofil 14 durch die sich vertikal an das Dachpaneel 3 anschließenden Seitenwandpaneele 2 gestützt, so dass ein Teil der von der Befestigungseinrichtung 14 aufgenommenen Kräfte über die Seitenwandpaneele 2 nach unten abgeleitet wird. Bei dem dargestellten und insoweit bevorzugten Versteifungsprofil 14 erstreckt sich das Versteifungsprofils 14, bis in den Anschlussbereich 34 des Dachpaneels 3 an das Seitenwandpaneel 2. Dort ist das Versteifungsprofil 14 mit einem das Versteifungsprofil 14 abstützenden Stützprofil 36 verbunden, über das vertikalen Kräfte in das Seitenwandpaneel 2 abgeleitet werden können. Beim dargestellten und insoweit bevorzugten Ausführungsbeispiel ist das Stützprofil 36 an die innere Decklage 38 des Seitenwandpaneels 2 angebunden.

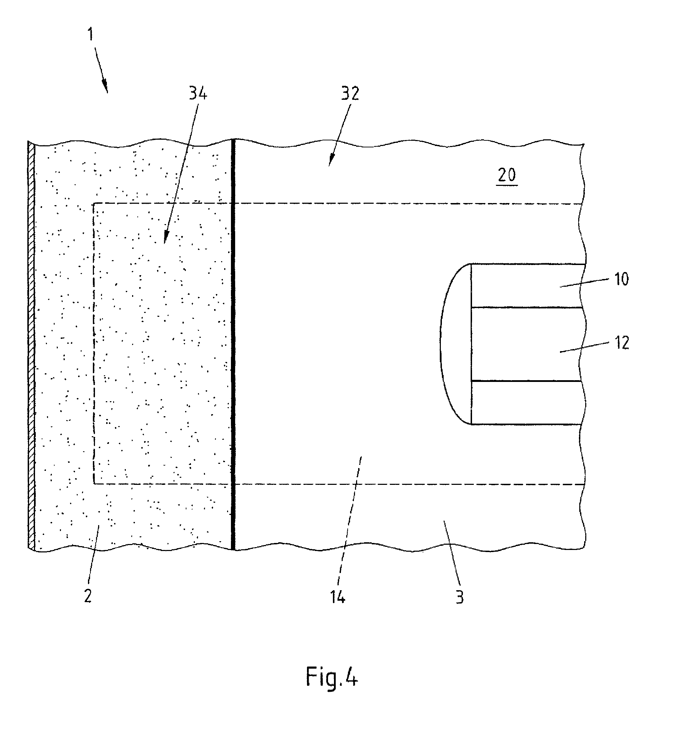

In der Fig. 4 ist der Eckabschnitt des Kofferaufbaus 1 aus der Fig. 3 in einem horizontalen Schnitt entlang der Ebene IV-IV aus Fig. 3 dargestellt. Das Dachpaneel 3 ist zu beiden Seiten in gleicher Weise an das jeweilige Seitenwandpaneel 2 angeschlossen, so dass auf die Darstellung des gegenüberliegenden Eckbereichs verzichtet werden kann. Das Seitenwandpaneel 2 ist rechtwinklig zum Dachpaneel 3 angeordnet.

Durch die gestrichelte Linie ist das Versteifungsprofil 14 innerhalb des Kernbereichs 22 des Dachpaneels 3 kenntlich gemacht. Daraus ergibt sich, dass das Versteifungsprofil 14 deutlich breiter, und zwar bei dem dargestellten Ausführungsbeispiel um ein Mehrfaches breiter, als das Schienenelement 10 ist. Durch diese große Breite des Versteifungsprofils 14 kann ein weiter erhöhtes Flächenträgheitsmoment erzielt werden.

## Patentansprüche

1. Kofferaufbau (1) eines Lastkraftwagens (L), Aufliegers (A) und/oder Anhängers mit einem Paneel, insbesondere Dachpaneel (3), Seitenwandpaneel (2) und/oder Bodenpaneel (4), wobei das Paneel eine innere Decklage (20), eine äußere Decklage (18) und einen dazwischen angeordneten Kernbereich (22) aufweist, wobei das Paneel wenigstens eine Befestigungseinrichtung (8) zum Befestigen von Zusatzeinrichtungen des Kofferaufbaus (1) umfasst, wobei die Befestigungseinrichtung (8) ein zur Innenseite des Paneels geöffnetes Schienenelement (10) und ein separates mit dem Schienenelement (10) verbundenes Versteifungsprofil (14) im Wesentlichen im Kernbereich (22) des Paneels aufweist und wobei die Befestigungseinrichtung (8) in einer Öffnung (28) der inneren Decklage (20) vorgesehen ist, **dadurch gekennzeichnet , dass** eine formschlüssige Verbindung direkt zwischen der inneren Decklage (20) und dem Schienenelement (10) vorgesehen ist und dass die formschlüssige Verbindung zwischen der inneren Decklage (20) und dem Schienenelement (10) durch Verklipsen oder Verrasten gebildet ist.

2. Kofferaufbau nach Anspruch 1,
**dadurch gekennzeichnet, dass** das Schienenelement (10) in der Öffnung (28) der inneren Decklage (20) vorgesehen ist.

3. Kofferaufbau nach Anspruch 1 oder 2,
**dadurch gekennzeichnet, dass** das Versteifungsprofil (14) länger als die Öffnung (28) der inneren Decklage (20) ist.

4. Kofferaufbau nach Anspruch 1 bis 3,
**dadurch gekennzeichnet, dass** sich das Versteifungsprofil (14) in Richtung des Schienenelements (10) wenigstens im Wesentlichen entlang des gesamten Paneels erstreckt.

5. Kofferaufbau nach einem der Ansprüche 1 bis 4,
**dadurch gekennzeichnet, dass** das Versteifungsprofil (14) einen T-förmigen, H-förmigen oder Ω-förmigen Querschnitt aufweist.

6. Kofferaufbau nach einem der Ansprüche 1 bis 5,
**dadurch gekennzeichnet, dass** das Versteifungsprofil (14) mit dem Schienenelement (10) formschlüssig verbunden ist.

7. Kofferaufbau nach einem der Ansprüche 1 bis 6,
**dadurch gekennzeichnet, dass** das Versteifungsprofil (14) im Kernbereich (22) des Paneels eingeschäumt ist.

8. Kofferaufbau nach einem der Ansprüche 1 bis 7,
**dadurch gekennzeichnet, dass** das Paneel ein Dachpaneel (3) ist.

9. Kofferaufbau nach Anspruch 8,
**dadurch gekennzeichnet, dass** das Versteifungsprofil (14) im Bereich wenigstens eines seitlichen Randes (32) des Dachpaneels (3), vorzugsweise über ein Stützprofil (36), gegenüber einem Seitenwandpaneel (2) abgestützt ist.

10. Kofferaufbau nach Anspruch 8,
**dadurch gekennzeichnet, dass** das Versteifungsprofil (14) im Bereich wenigstens eines seitlichen Randes (32) des Dachpaneels (3), vorzugsweise über ein Stützprofil (36), gegenüber einem Stirnwandpaneel (5) und/oder einem Rückwandpaneel (6) abgestützt ist.

11. Kofferaufbau nach einem der Ansprüche 1 bis 10,
**dadurch gekennzeichnet, dass** in einem Anschlussbereich (34) des Paneels, vorzugsweise des Dachpaneels (3), ein Stützprofil (36) vorgesehen ist, das mit einer Mehrzahl von Versteifungsprofilen (14) verbunden ist.

12. Kofferaufbau nach einem der Ansprüche 1 bis 11,
**dadurch gekennzeichnet, dass** das Versteifungsprofil (14) ein gerolltes Profil ist.

13. Kofferaufbau nach einem der Ansprüche 1 bis 12,
**dadurch gekennzeichnet, dass** freie Ränder (24) des Versteifungsprofils (14) formschlüssig in Hinterschneidungen (26) am Schienenelement (10) eingreifen.

## Claims

1. Box body (1) of a lorry (L), semi-trailer (A) and/or trailer having a panel, in particular a roof panel (3), side wall panel (2) and/or floor panel (4), wherein the panel has an inner top layer (20), an outer top layer (18) and a core area (22) arranged between them, wherein the panel comprises at least one fastening device (8) for fastening auxiliary equipment of the box body (1), wherein the fastening device (8) has a rail element (10) open to the inside of the panel and a separate reinforcement profile (14) substantially in the core area (22) of the panel and joined to the rail element (10), and wherein the fastening device (8) is provided in an opening (28) of the inner top layer (20), **characterised in that** a form-locked join is provided directly between the inner top layer (20) and the rail element (10), and **in that** the form-locked join between the inner top layer (20) and the rail element (10) is formed by clipping or locking into place.

2. Box body according to Claim 1, **characterised in that** the rail element (10) is provided in the opening (28) of the inner top layer (20).

3. Box body according to Claim 1 or 2, **characterised in that** the reinforcement profile (14) is longer than the opening (28) of the inner top layer (20).

4. Box body according to any one of Claims 1 to 3, **characterised in that** the reinforcement profile (14) extends at least for the most part along the whole panel in the direction of the rail element (10).

5. Box body according to any one of Claims 1 to 4, **characterised in that** the reinforcement profile (14) has a T-shaped, H-shaped or Ω-shaped cross-section.

6. Box body according to any one of Claims 1 to 5, **characterised in that** the reinforcement profile (14) is joined to the rail element (10) in a form-locking manner.

7. Box body according to any one of Claims 1 to 6, **characterised in that** the reinforcement profile (14) is wrapped in foam in the core area (22) of the panel.

8. Box body according to any one of Claims 1 to 7, **characterised in that** the panel is a roof panel (3).

9. Box body according to Claim 8, **characterised in that** the reinforcement profile (14) is supported in the area of at least one side edge (32) of the roof panel (3) with respect to a side wall panel (2), preferably by means of a support profile (36).

10. Box body according to Claim 8, **characterised in that** the reinforcement profile (14) is supported in the area of at least one side edge (32) of the roof panel (3) with respect to a front wall panel (5) and/or a back wall panel (6), preferably by means of a support profile (36).

11. Box body according to any one of Claims 1 to 10, **characterised in that** a support profile (36) is provided in a connecting area (34) of the panel, preferably of the roof panel (3), which is joined to a plurality of reinforcement profiles (14).

12. Box body according to any one of Claims 1 to 11, **characterised in that** the reinforcement profile (14) is a rolled profile.

13. Box body according to any one of Claims 1 to 12, **characterised in that** free edges (24) of the reinforcement profile (14) engage in a form-locking manner with the undercuts (26) on the rail element (10).

## Revendications

1. Caisse de fourgon (1) d'un camion, (L), de semi-remorque (A) et/ou de remorque avec un panneau, en particulier un panneau de toit (3) un panneau de paroi latéral (2) et/ou un panneau de plancher (4) pour lequel le panneau présente une couche de couverture intérieure (20), une couche de couverture extérieure (18) et une zone centrale (22) disposée entre celles-ci, pour lequel le panneau comprend au moins un dispositif de fixation (8) pour fixer des systèmes supplémentaires de la caisse de fourgon (1), pour lequel le dispositif de fixation (8) présente un élément de rail (10) ouvert sur le côté intérieur du panneau et un profilé de renfort (14) séparé relié à l'élément de rail (10) pour l'essentiel dans la zone centrale (22) et pour lequel le dispositif de fixation (8) est prévu dans une ouverture (28) de la couche de couverture intérieure (20), **caractérisée en ce qu'**un raccord en complémentarité de forme est prévu directement entre la couche de couverture intérieure (20) et l'élément de rail (10) et **en ce que** le raccord en complémentarité de forme est constitué entre le couche de couverture intérieure (20) et l'élément de rail (10) par agrafage et encliquetage.

2. Caisse de fourgon selon la revendication 1, **caractérisée en ce que** l'élément de rail (10) est prévu dans l'ouverture (28) de la couche de couverture intérieure (20).

3. Caisse de fourgon selon la revendication 1 ou 2, **caractérisée en ce que** le profilé de renfort (14) est plus long que l'ouverture (28) de la couche de couverture intérieure (20).

4. Caisse de fourgon selon la revendication 1 à 3, **caractérisée en ce que** le profilé de renfort (14) s'étend en direction de l'élément de rail (10) au moins pour l'essentiel le long de tout le panneau.

5. Caisse de fourgon selon une quelconque des revendications 1 à 4, **caractérisée en ce que** le profilé de renfort (14) présente une section en forme de T, en forme de H ou en forme de S2.

6. Caisse de fourgon selon une quelconque des revendications 1 à 5, **caractérisée en ce que** le profilé de renfort (14) est relié par complémentarité de forme à l'élément de rail (10).

7. Caisse de fourgon selon une quelconque des revendications 1 à 6, **caractérisée en ce que** le profilé de renfort (14) est garni de mousse dans la zone centrale (22) du panneau.

8. Caisse de fourgon selon une quelconque des revendications 1 à 7, **caractérisée en ce que** le panneau est un panneau de toit (3).

9. Caisse de fourgon selon la revendication 8, **caractérisée en ce que** le profilé de renfort (14) est supporté dans la zone au moins d'un bord latéral (32) du panneau de toit (3), de préférence sur un profilé de support (36), en face d'un panneau de paroi latéral (2).

10. Caisse de fourgon selon la revendication 8, **caractérisée en ce que** le profilé de renfort (14) est supporté dans la zone au moins d'un bord latéral (32) du panneau de toit (3), de préférence sur un profilé de support (36), en face d'un panneau de paroi frontal (5) et/ou d'un panneau de paroi arrière (6).

11. Caisse de fourgon selon une quelconque des revendications 1 à 10, **caractérisée en ce que** dans une zone de raccordement (34) du panneau, de préférence du panneau de toit (3), un profilé de support (36) est prévu qui est relié à une pluralité de profilés de renfort (14).

12. Caisse de fourgon selon une quelconque des revendications 1 à 11, **caractérisée en ce que** le profilé de renfort (14) est un profilé roulé.

13. Caisse de fourgon selon une quelconque des revendications 1 à 12, **caractérisée en ce que** les bords libres (24) du profilé de renfort (14) viennent en prise par complémentarité de forme dans les découpes arrière (26) sur l'élément de rail (10).
